# EUROPÄISCHE PATENTSCHRIFT

(11) **EP 2 604 877 B1**
(45) Veröffentlichungstag und Bekanntmachung des Hinweises auf die Patenterteilung: **17.08.2016**
(21) Anmeldenummer: 12195648.6
(22) Anmeldetag: 05.12.2012
(51) Int. Cl.: F16C 33/44, F16C 33/56, F16C 33/66

(54) **Lagerkäfig und Lagerkäfigsegment**
Bearing cage and bearing cage segment
Cage de roulement et segment de cage de roulement

(30) Priorität: 12.12.2011 DE 102011088232
(43) Veröffentlichungstag der Anmeldung: 19.06.2013
(73) Patentinhaber: Aktiebolaget SKF, 415 50 Göteborg (SE)
(72) Erfinder: Haag, Cornelia, 97633 Aubstadt (DE); Schulz, Ingo, 97447 Gerolzhofen (DE)
(74) Vertreter: Schonecke, Mitja

(56) Entgegenhaltungen:
- WO-A1-2009/015855
- DE-A1-102010 019 945
- JP-A- 2007 032 806
- JP-A- 2009 121 531
- JP-A- 2009 180 367
- JP-A- 2009 281 395
- JP-A- 2010 190 272
- JP-A- 2010 236 621
- JP-A- 2011 241 860

## Beschreibung

Ausführungsbeispiele der vorliegenden Erfindung befassen sich mit Lagerkäfigen beziehungsweise mit Segmenten von Lagerkäfigen zur Verwendung in Wälzlagern.

Wälzlager werden üblicherweise zur Verringerung der Reibung und des Verschleißes geschmiert. Das bedeutet, Öl, Fett oder ein sonstiges die Reibung verringerndes Schmiermittel wird in das Lager eingebracht, um dem durch Rollreibung und Gleitreibung verursachten Verschleiß vorzubeugen. Um zu verhindern, dass das Schmiermittel aus dem Lager austritt und somit dem zu schmierenden Kontakt nicht mehr in ausreichendem Maße zur Verfügung steht, werden häufig eine oder mehrere Dichtungen teils komplexer Bauart verwendet.

Selbst wenn das Schmiermittel durch Dichtungen zwischen den Lagerringen gehalten wird, kann es zu erhöhtem Verschleiß kommen, wenn das Schmiermittel aufgrund der Geometrie beispielsweise des Lagerkäfigs nicht oder nur in geringem Maße an die zu schmierenden Kontaktpunkte zwischen Lagerring bzw. Laufbahn und Wälzkörper gelangen kann. Einige herkömmliche Lösungen versuchen dem entgegenzuwirken, indem Lagerkäfige verwendet werden, die spezielle Reservoirs für das Schmiermittel aufweisen.

Die japanische Patentanmeldung JP2009-281 395 A schlägt vor, bei einem Kugellager, das axial mittels einer externen Ölzufuhr permanent geschmiert wird, an einem Lagerinnenring eine Anordnung von einem ölabweisenden Material und einem daran angrenzenden nicht ölabweisenden Material anzubringen, um zu verhindern, dass das zugeführte Öl das Lager schnell wieder verlässt. Diesem Zweck dient so gebildete die Barriere aus ölabweisendem Material am Lagerinnenring.

Die japanische Patentanmeldung JP2007-032 806 A befasst sich damit, wie ein durch das Schmiermittel in einem Wälzlager verursachte Verlustmoment verringert werden kann, das einen Wirkungsgrad des Wälzlagers verschlechtert. Um dies zu erreichen, schlägt das Dokument vor, an der äußeren Fläche des Wälzlagerkäfigs ein Material mit einer ölabweisenden Eigenschaft anzuordnen, um zu verhindern, dass der Lagerkäfig während der Rotation das Öl mitnimmt und so ein der Rotation entgegen gerichtetes Drehmoment hervorruft.

Die internationale Patentanmeldung WO2009/015855A1 betrifft eine Lageranordnung mit einem Innenring, einem Außenring und Rollkörpern. Die Rollkörper werden in einem Käfig geführt. Die Lageranordnung enthält ein Schmiermittel und zumindest ein Dichtelement, das zwischen dem Lageraußenring und dem Lagerinnenring montiert ist. Um ein Anhaften des Schmiermittels an bestimmten Oberflächenbereichen innerhalb des Lagers zu verhindern, sind diese zumindest teilweise mit einer oleophoben Beschichtung versehen.

Die japanische Patentanmeldung 2011241860A beschreibt ein Wälzlager mit einem Käfig, der dazu fähig ist, selbst bei einer übermäßigen Schmiermittelansammlung innerhalb des Lagers die Reibung zu reduzieren. Der Käfig umfasst eine Mehrzahl von ringförmigen Ausnehmungen zur Aufnahme der Wälzkörper und eine Mehrzahl von säulenartigen Teilen, deren Oberfläche in Rollrichtung betrachtet, eine unterschiedliche Krümmung aufweist, als entgegen der Rollrichtung betrachtet.

Es besteht also die Notwendigkeit eine zuverlässige Schmierung zu gewährleisten um ein langlebiges Lager zur Verfügung zu stellen.

Dies wird durch einen Lagerkäfig oder ein Lagerkäfigsegment für ein Wälzlager, gemäß Anspruch 1, ermöglicht.

Dadurch kann gemäß einigen Ausführungsbeispielen der Erfindung bewirkt werden, dass sich ein Schmiermittel, wie beispielsweise Öl oder Fett, stärker an den zu schmierenden Stellen konzentriert, wenn es von den übrigen, für die Schmierung weniger relevanten Stellen, die aus dem ausgewählten Material bestehen oder mit diesem beschichtet sind, abgestoßen wird oder schlechter an diesen als an deren Umgebung haftet. In diesem Zusammenhang bedeutet die Eigenschaft lipophob, dass das Material fettabstoßend wirkt bzw. dass Fette an einem solchen Material weniger gut haften wie an einem anderen Material, dass zur Herstellung eines Lagerkäfigsegmentes verwendet werden kann. Selbiges gilt für die Eigenschaft oliophob in Bezug auf Öle.

Zur Bestimmung des Grades der Lipo- oder Oliophobie kann beispielsweise der sog. Kontaktwinkel herangezogen werden. Als Kontaktwinkel wird der Winkel bezeichnet, den eine Oberfläche eines Öl- bzw. Fetttropfens auf der Oberfläche eines Feststoffs zu dessen Oberfläche bildet. Die Größe des Kontaktwinkels zwischen Flüssigkeit und Feststoff hängt ab von der Wechselwirkung zwischen den Stoffen an der Berührungsfläche. Je geringer diese Wechselwirkung ist, desto größer wird der Kontaktwinkel. Bei der Bestimmung des Kontaktwinkels ruht also ein Tropfen der zu betrachtenden Flüssigkeit auf einer festen Unterlage und ist von Gas umgeben. Der Kontaktwinkel ist der Winkel, der von der Flüssigkeit an der Stelle gebildet wird, an der sich die feste, flüssige und gasförmige Phase treffen.

Aus der Bestimmung der Kontaktwinkel können bestimmte Eigenschaften der Oberfläche eines Feststoffs - wie zum Beispiel die Oberflächenenergie - bestimmt werden.

Im Fall der Verwendung von Öl als Flüssigkeit kann man beispielsweise bei geringen Kontaktwinkeln die Oberfläche als oliophil, bei Winkeln um 90° und mehr als oliophob und bei noch größeren Winkeln als superoliphob bezeichnen. Selbiges gilt sinngemäß für lipophobe Oberflächen beziehungsweise Materialien. Olio- und Lipophobe Oberflächen bestehen in der Regel aus olio- und lipophoben Substanzen oder sind von diesen bedeckt. Beispiele sind die Beschichtung von Oberflächen mit PTFE (Teflon) oder die Imprägnierung von Isolierstoffen und Textilien.

Das lipophobe bzw. oliophobe Material umfasst bei einigen Ausführungsbeispielen in vorteilhafter Weise Nanofilamente. Insbesondere kann das lipo-/ oliophobe Material Silikonnanofilamente umfassen. Die lipo- bzw. oliophobe Eigenschaft kann beispielsweise durch Einbringen von Fluorverbindungen in Silikonnanofilamente erzielt werden. Als Stoff haben sich dabei beispielsweise polymethylsilsesquioxane Nanofilamente bewährt. Silikonnanofilamente können bespielsweise einen Durchmesser von ca. 5 nm und eine Länge von einigen Mikrometern aufweisen. Sie werden aus Silanen hergestellt. Chemisch sind sie wie Silikone aufgebaut, sie besitzen aufgrund der Nanostruktur jedoch teilweise andere physikalische und chemische Eigenschaften. Wie soeben erwähnt entspricht die chemische Struktur von Silikonnanofilamenten der der Silikone. Siliziumatome sind über Sauerstoffatome miteinander verbunden. Wenn mehr als zwei Sauerstoffatome als Brückenatome dienen, bilden sich dreidimensionale Netzwerke. Die vierte Bindungsstelle der Siliziumatome ist dann durch einen organischen Rest abgesättigt.

Unter bestimmten Bedingungen entstehen auf Oberflächen während der Synthese keine massiven Silikon-Festkörper, sondern kleine Filamente, die nur wenige Nanometer dick und nur einige zehn Nanometer lang sind. Silikonnanofilamente können beispielsweise in einem Verfahren aus der Gasphase hergestellt werden. Hierzu wird Trichlorsilan in einer Reaktionskammer zusammen mit einer präzise eingestellten Luftfeuchtigkeit verdampft und dieser Mischung ein Substrat mehrere Stunden ausgesetzt. Dabei ist zu beachten, dass die Konzentration an Trichlorsilan und Luftfeuchtigkeit sehr genau eingestellt wird, sonst findet zwar die Kondensationsreaktion statt, d. h. es bildet sich das Silikon, aber keine Nanofilamente.

Silikonnanofilamente haben vielfältige, teilweise extreme Eigenschaften, die sich durch nachträgliche chemische Modifikation in das extreme Gegenteil verkehren lassen. So sind mit Silikonnanofilamenten beschichtete Oberflächen auch extrem wasserabweisend (superhydrophob). Beschrieben wird diese Eigenschaft - wie erläutert - durch den Kontaktwinkel, der im Fall von Silikonnanofilamentschichten für Wasser bei annähernd bis zu 170° liegt. Steht die Oberfläche auch nur in einem kleinen Winkel, z. B. 2° schräg, rollen die Perlen sofort von der Oberfläche ab.

Das bei Ausführungsbeispielen zum Einsatz kommende lipophobe bzw. oliophobe Material kann auch als (super)amphiphobisch bezeichnet werden. Es hat im Sinne der vorliegenden Erfindung die Eigenschaft, dass es sowohl hydrophob/super-hydrophob (also wasserabweisend) als auch oliophob/super-oliophob und lipophob/super-lipophob (also öl- und fettabweisend) ist. Die Herstellung derartiger Materialien ist bekannt. In diesem Zusammenhang wird bezüglich der Herstellung der Materialien und deren Eigenschaft ausdrücklich auf den Beitrag von J. Zimmermann et al. "Patterned superfunctional surfaces based on a silicone nanofilament coating" in The Royal Society of Chemistry, 2008, Heft 4, Seiten 450 bis 452, verwiesen und Bezug genommen.

Gemäß einigen Ausführungsbeispielen ist das ausgewählte Material mit Oligo- und Lipophober Eigenschaft ein Silan, bevorzugt ein Trichlorosilan, besonders bevorzugt ein Perfluorooctyl-Trichlorosilan (PFOTS). Das Silan kann dabei auf ein mit einem Sauerstoffplasma aktiviertes Elastomersubstrat aufgebracht sein.

Zu dem Stoff PFOTS sei folgendes bemerkt: Die Silane sind eine Stoffgruppe chemischer Verbindungen, die aus einem Silicium-Grundgerüst und Wasserstoff bestehen. Sie können einen verzweigten (iso- und neo-Silane) oder unverzweigten (n-Silane) Aufbau haben. Die hier interessierenden Derivate der Silane entstehen formal durch Substitution der Wasserstoffatome durch Halogene, Sauerstoff, Stickstoff und Kohlenstoff bzw. diese Elemente enthaltene Gruppen. Zu nennen sind hier die Chlorsilane Monochlorsilan (SiH3Cl), Dichlorsilan (SiH2Cl2), Trichlorsilan (SiHCl3) und Tetrachlorsilan (SiCl4).

Hierbei ist insbesondere der Einsatz von Perfluorooctyl-Trichlorosilan (PFOTS) als Beschichtungsmaterial zu nennen. Eine Beschichtung mit einem Silikon-Nanofilament ohne weitere Modifikation ist stark hydrophob und oliophil. Die Plasmabehandlung der Oberfläche erzeugt eine Benetzbarkeit sowohl für Wasser als auch für Öl (superamphiphilische Eigenschaft). Die Refunktionalisierung mit Oktadecyl-Trichlorosilan (OTS) würde die ursprüngliche Hydrophobie des Silikon-Nanofilaments wieder herstellen, wobei allerdings die Oliophilie erhöht wird. Wenn Perfluorooctyl-Trichlorosilan (PFOTS) in der Refunktionalisierung verwendet wird, wird die Beschichtung abweisend sowohl für polare als auch für nicht-polare Flüssigkeiten (d. h. die superamphiphobische Eigenschaft, d. h. Omniphobie, wird erzeugt).

Weiterhin sei auf den Beitrag von A. Tuteja et al. "Robust omniphobic surfaces" in PNAS, 25. November 2008, Vol. 105, Nr. 47, Seite 18200 bis 18205, hingewiesen, auf den ausdrücklich Bezug genommen wird und in dem gleichermaßen Detailinformationen zur Herstellung einer olio-, lipo- und omniphoben Oberfläche enthalten sind. Hier wird insbesondere der Einsatz von fluorierten polyedrischen oligomeren Silsesquioxanen (fluorodecyl POSS) hingewiesen.

Bei einigen nicht erfindungsgemäßen Ausführungsbeispielen besteht die Oberfläche eines Lagerkäfigs bzw. eines Segmentes eines Lagerkäfigs teilweise aus dem ausgewählten Material und teilweise aus einem weiteren Material, mit nicht- oliophober oder nicht- lipophober Eigenschaft, also mit geringerer abstoßender Eigenschaft als das ausgewählte Material. Dies kann dazu führen, dass die Schmierung an den Bereichen des Lägerkäfigs unterstützt wird, deren Oberfläche aus dem Material mit nicht- oliophober oder nicht- lipophober Eigenschaft besteht. Somit kann die Schmierung durch einfache geometrische Dimensionierung der Oberflächenbereiche gezielt gesteuert oder beeinflusst werden, was zu eine längeren Lebensdauer der Wälzlager führen kann. Bei einigen Ausführungsbeispielen wird die Oberfläche eines mehr- oder einteiligen Lagerkäfigs zumindest teilweise mit dem ausgewählten Material beschichtet bzw. der Käfig ist ganz oder teilweise aus dem Material gefertigt. Beispielsweise kann die gesamte Umfangsoberfläche des Käfigs oder anforderungsbedingte Abschnitte der Umfangsoberfläche mit dem ausgewählten Material beschichtet werden, während die innenliegende Oberfläche bzw. anforderungsbedingte Abschnitte der innenliegenden Oberfläche aus einem weiteren Material mit geringerer oliophober oder lipophober Eigenschaft bestehen, um dem Effekt des Strömungsverhaltens des Schmiermittels zu beeinflussen. Hierbei ist das Strömungsverhalten des Schmierstoffs in der Art zu gestalten, dass der Schmierstoff in die zu schmierenden Kontaktflächen gelangen kann, u.a. mit Hilfe von Kapillareffekten.

Bei Ausführungsbeispielen, bei denen lediglich die Oberfläche eines Käfigrohlings oder eines Käfigs eines weiteren Materials nach dessen Bereitstellung oder Herstellung mit dem ausgewählten Material beschichtet wird, um die vorgenannten Effekte zu erzielen, kann die Beschichtung beispielsweise mithilfe einer Maske erzeugt werden, von der die nicht zu beschichtenden Oberflächenbereiche vor der Beschichtung abgedeckt werden. Als Material für die Maske kann beispielsweise Wachs verwendet werden.

Bei weiteren Ausführungsbeispielen wird das Material des Käfigs an einigen Oberflächenbereichen selbst durch eine chemische oder physikalische Behandlung umgewandelt, um die oliophobe oder lipophobe Eigenschaft zu erzielen.

Bei einigen Ausführungsbeispielen von Lagerkäfigen oder Lagerkäfigsegmenten ist das ausgewählte Material mit der lipophoben und/oder oliophoben Eigenschaft im Wesentlichen außerhalb der Käfigtaschen angeordnet. Dies kann bewirken, dass der Schmierstoff oder das Schmiermittel an den Käfigtaschen konzentriert ist, sodass die Wälzkörper jederzeit ausreichend Schmiermittel aus dem Bereich der Käfigtasche in den Schmierspalt eintragen bzw. transportieren können.

Bei einigen Ausführungsbeispielen besteht ein vorbestimmter Oberflächenbereich aus einem nicht lipophoben oder nicht oliophoben Material und wird auf zwei einander gegenüberliegenden Seiten von dem ausgewählten Material begrenzt, um einen gerichteten Fetttransport entlang des vorbestimmten Oberflächenbereichs zu bewirken. Dies kann bei geeigneter Dimensionierung des vorbestimmten Oberflächenbereichs beispielsweise dazu führen, dass es zu einer Kapillarwirkung kommt, sodass ein Schmierstoff entlang des vorbestimmten Oberflächenbereichs transportiert wird. Bei solchen Ausführungsbeispielen kann ein gezielter Transport von Schmierstoff erreicht werden.

Bei einigen Ausführungsbeispielen beträgt der Kontaktwinkel des ausgewählten Materials mit der lipophoben und/oder oliophoben Eigenschaft mit Fett bzw. Öl mehr als 90°, bevorzugt mehr als 120° und besonders bevorzugt mehr als 150°.

Ein bevorzugtes Ausführungsbeispiel der vorliegenden Erfindung wird nachfolgend, bezugnehmend auf die beigefügte Figur, näher erläutert.

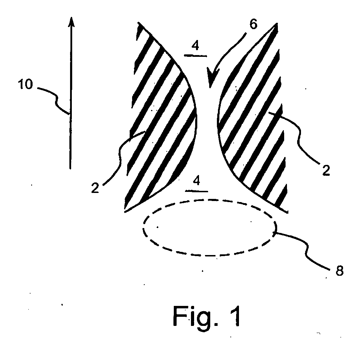

Figur 1 zeigt ein Ausführungsbeispiel einer speziellen Oberflächengestaltung eines Lagerkäfigs oder eines Lagerkäfigsegmentes.

Figur 1 zeigt einen Ausschnitt einer Oberfläche eines Lagerkäfigs oder eines Segmentes eines Lagerkäfigs. Ein vorbestimmter Oberflächenbereich 4 besteht aus einem nicht lipophoben bzw. einem nicht oliophoben Material. Der vorbestimmte Oberflächenbereich 4 wird auf zwei einander gegenüberliegenden Seiten von Oberflächenbereichen 2 begrenzt, die aus dem ausgewählten Material bestehen oder mit diesem beschichtet sind, um einen gerichteten Schmiermitteltransport entlang des vorbestimmten Oberflächenbereichs 4 zu bewirken. Erfindungsgemäß kann aufgrund eines Kapillareffekts Schmiermittel entlang des verjüngten Kanals 6 gefördert werden. Befindet sich beispielsweise nur im Schmierstoffbereich 8 ein Schmierstoff bzw. ein Schmiermittel, wird dieses in der Transportrichtung 10 durch den verjüngten Kanal 6 transportiert.

Es versteht sich von selbst, dass Ausführungsbeispiele von Lagerkäfigen oder Lagerkäfigsegmenten in beliebigen Wälzlagertypen, beispielsweise in Rillen- oder Schrägkugellagern, in Zylinder-, Tonnen-, oder Kegelrollenlagern sowie in Nadellagern verwendet werden können. Dabei kann die Geometrie der Käfige oder Käfigsegmente besonders flexibel auf die einzelnen Lager angepasst werden, da für die Optimierung der Schmierung ein weiterer Freiheitsgrad zur Verfügung steht.

### Bezugszeichenliste

- 2: ausgewählter Teil einer Oberfläche
- 4: vorbestimmter Oberflächenbereich
- 6: verjüngter Kanal
- 8: Schmierstoffbereich
- 10: Transportrichtung

## Patentansprüche

1. Lagerkäfig oder Lagerkäfigsegment für ein Wälzlager, bei dem zumindest ein ausgewählter Teil einer Oberfläche (2) des Lagerkäfigs oder des Lagerkäfigsegments aus einem ausgewählten Material mit einer lipophoben und/oder oliophoben Eigenschaft besteht, wobei an der Oberfläche ein vorbestimmter Oberflächenbereich (4) aus einem nicht- lipophoben Material auf zwei einander gegenüberliegenden Seiten von dem ausgewählten Material begrenzt wird, **dadurch gekennzeichnet, dass** der vorbestimmten Oberflächenbereich (4) zwischen den einander gegenüberliegenden Seiten aus dem ausgewählten Material einen verjüngten Kanal (6) bildet, entlang dessen aufgrund eines Kapillareffektes ein gerichteter Schmiermitteltransport bewirkt wird.

2. Lagerkäfig oder Lagerkäfigsegment gemäß Anspruch 1, bei dem das ausgewählte Material mit der lipophoben und/oder oliophoben Eigenschaft im Wesentlichen außerhalb der Käfigtaschen angeordnet ist.

3. Lagerkäfig oder Lagerkäfigsegment gemäß einem der vorhergehenden Ansprüche, bei dem das ausgewählte Material ein Silan, bevorzugt ein Trichlorosilan, besonders bevorzugt ein Perfluorooctyl-Trichlorosilan (PFOTS), ist.

4. Wälzlager mit einem Lagerkäfig oder zumindest einem Lagerkäfigsegment gemäß einem der vorhergehenden Ansprüche.

5. Verfahren zum Herstellen eines Lagerkäfigs oder eines Lagerkäfigsegments für ein Wälzlager, umfassend:
Bereitstellen eines Rohlings des Lagerkäfigs oder des Lagerkäfigsegments aus einem Käfigmaterial; und
Anordnen eines ausgewählten Materials mit einer lipophoben und/oder oliophoben Eigenschaft auf zumindest einem Teil einer Oberfläche des Lagerkäfigs oder des Segments derart, dass auf der Oberfläche ein vorbestimmter Oberflächenbereich (4) aus einem nicht- lipophoben Material auf zwei einander gegenüberliegenden Seiten von dem ausgewählten Material derart begrenzt wird, dass der vorbestimmten Oberflächenbereich (4) zwischen den einander gegenüberliegenden Seiten aus dem ausgewählten Material einen verjüngten Kanal (6) bildet, entlang dessen aufgrund eines Kapillareffektes ein gerichteter Schmiermitteltransport bewirkt wird.

6. Verfahren zum Herstellen eines Lagerkäfigs oder eines Lagerkäfigsegments gemäß Anspruch 5, bei dem das Anordnen umfasst:
Beschichten eines ausgewählten Oberflächenbereichs mit einem Maskenmaterial um eine maskierte Oberfläche zu erhalten; und
Beschichten der maskierten Oberfläche mit dem ausgewählten Material.

7. Verfahren zum Herstellen eines Lagerkäfigs oder eines Lagerkäfigsegments gemäß Anspruch 6, ferner umfassend:
Entfernen des Maskenmaterials von dem Ausgewählten Oberflächenbereich.

## Claims

1. Bearing cage or bearing cage segment for a rolling-element bearing, in which at least one selected part of a surface (2) of the bearing cage or of the bearing cage segment is made of a selected material having a lipophobic and/or oleophobic property, wherein on the surface a predetermined surface region (4) made of a non-lipophobic material is bounded on two mutually opposite sides by the selected material, **characterized in that** the predetermined surface region (4) between the mutually opposite sides made of the selected material forms a channel (6) of reduced width, along which a directed lubricant transport is effected due to a capillary effect.

2. Bearing cage or bearing cage segment according to Claim 1, in which the selected material having the lipophobic and/or oleophobic property is arranged essentially outside the cage pockets.

3. Bearing cage or bearing cage segment according to either of the preceding claims, in which the selected material is a silane, preferably a trichlorosilane, particularly preferably a perfluorooctyltrichlorosilane (PFOTS).

4. Rolling-element bearing having a bearing cage or at least one bearing cage segment according to one of the preceding claims.

5. Method for producing a bearing cage or a bearing cage segment for a rolling-element bearing, comprising:
providing a blank of the bearing cage or of the bearing cage segment made of a cage material; and
arranging a selected material having a lipophobic and/or oleophobic property on at least one part of a surface of the bearing cage or of the segment such that, on the surface, a predetermined surface region (4) made of a non-lipophobic material is bounded on two mutually opposite sides by the selected material such that the predetermined surface region (4) between the mutually opposite sides made of the selected material forms a channel (6) of reduced width, along which a directed lubricant transport is effected due to a capillary effect.

6. Method for producing a bearing cage or a bearing cage segment according to Claim 5, in which the arranging step comprises:
coating a selected surface region with a masking material in order to obtain a masked surface; and
coating the masked surface with the selected material.

7. Method for producing a bearing cage or a bearing cage segment according to Claim 6, further comprising:
removing the masking material from the selected surface region.

## Revendications

1. Cage de palier ou segment de cage de palier pour un palier à roulement, dans laquelle ou lequel au moins une partie sélectionnée d'une surface (2) de la cage de palier ou du segment de cage de palier est constituée d'un matériau sélectionné ayant une propriété lipophobe et/ou oléophobe, une région de surface prédéterminée (4) constituée d'un matériau non lipophobe étant limitée, au niveau de la surface, à deux côtés opposés constitués du matériau sélectionné, caractérisé(e) en ce que la région de surface prédéterminée (4) forme, entre les côtés opposés l'un à l'autre constitués du matériau sélectionné, un canal rétréci (6) le long duquel s'effectue un transport de lubrifiant orienté du fait de l'effet de capillarité.

2. Cage de palier ou segment de cage de palier selon la revendication 1, dans laquelle ou lequel le matériau sélectionné ayant une propriété lipophobe et/ou oléophobe est disposé essentiellement l'extérieur des cavités de la cage.

3. Cage de palier ou segment de cage de palier selon l'une quelconque des revendications précédentes, dans lequel le matériau sélectionné est un silane, de préférence un trichlorosilane, particulièrement préférablement un perfluorooctyl-tricholosilane (PFOTS).

4. Palier à roulement comprenant une cage de palier ou au moins un segment de cage de palier selon l'une quelconque des revendications précédentes.

5. Procédé de fabrication d'une cage de palier ou d'un segment de cage de palier pour un palier à roulement, comprenant :
la fourniture d'une ébauche de cage de palier ou de segment de cage de palier constituée d'un matériau de cage ; et
l'agencement d'un matériau sélectionné ayant une propriété lipophobe et/ou oléophobe sur au moins une partie d'une surface de la cage de palier ou du segment, de telle sorte qu'une région de surface prédéterminée (4) constituée d'un matériau non lipophobe soit limitée sur la surface à deux côtés opposés constitués du matériau sélectionné de telle sorte que la région de surface prédéterminée (4) forme, entre les côtés opposés constitués du matériau sélectionné, un canal rétréci (6), le long duquel s'effectue un transport de lubrifiant orienté du fait de l'effet de capillarité.

6. Procédé de fabrication d'une cage de palier ou d'un segment de cage de palier selon la revendication 5, dans lequel l'agencement comprend
le revêtement d'une région de surface sélectionnée avec un matériau de masquage pour obtenir une surface masquée ; et
le revêtement de la surface masquée avec le matériau sélectionné.

7. Procédé de fabrication d'une cage de palier ou d'un segment de cage de palier selon la revendication 6, comprenant en outre :
l'enlèvement du matériau de masquage de la région de surface sélectionnée.
